# EUROPEAN PATENT APPLICATION

(11) **EP 1 319 431 A2**
(43) Date of publication of application: **18.06.2003**
(21) Application number: 02027588.9
(22) Date of filing: 10.12.2002
(51) Int. Cl.: A63F 13/12

(54) **Network game system, client system, network game processing method and recording medium**

(30) Priority: 13.12.2001 JP 2001379493
(71) Applicant: Square Co., Ltd., Tokyo 153-8688 (JP)
(72) Inventor: Kimura, Masaaki, Square Co., Ltd., Tokyo 153-8688 (JP)
(74) Representative: Grünecker, Kinkeldey, Stockmair & Schwanhäusser Anwaltssozietät

(57) **Abstract**

A predetermined maximum communication amount is set for packet communication between an echo server and each of the clients (communication terminals). In addition, the packets from each of the clients (communication terminals) are set to be in a predetermined amount. Thus, a load on the network can be reduced.

## Description

### CROSS REFERENCE TO RELATED APPLICATION

The present invention relates to subject matter contained in Japanese Patent Application No. 2001-379493, filed on December 13, 2001, the disclosure of which is expressly incorporated herein by reference in the entirety.

### BACKGROUND OF THE INVENTION

### Field of the Invention

The present invention relates to a network game system using a UDP/IP communication protocol, a server system, a client system, a network game processing method and a recording medium.

### Description of the Related Art

In order to improve game characteristics in a network game, quick responses are required. In this case, a packet is transmitted when a request in accordance with an operation by a player is sent. The transmitted packet is compressed and is sent to a game server. Thus, the load on the network is reduced such that a quick response can be obtained.

In the network game, the maximum number of people connectable to one server is set. However, the same number of players does not always participate in the game. The number varies largely depending on times. Thus, estimating a current network load is extremely difficult. Therefore, when an amount of communications is greater than or equal to the prepared backbone, a time lag occurs in a response from the game server due to an increase in traffic. As a result, it is difficult to maintain the response speed. In order to avoid the situation, the packet amount may need to be suppressed significantly as the number of players participating in the network game is increased.

In general, packets flow frequently and continuously all the time during a network game. Some clients (players) pause play or stop play. In this case, however, it is technically difficult to assign the communication resources to other clients in the game server while the game is advancing.

In this way, in order to improve the game characteristics in a network game, fast responses are required. Thus, the development of a system for improving the response speed in a network game has been desired.

### SUMMARY OF THE INVENTION

The present invention was made in view of the above situation. It is an object of the present invention to improve the response speed in a network game by setting a maximum value of the load on the game server.

In order to achieve the above object, according to a first aspect of the present invention, there is provided a network game system including a server system that provides an environment for a network game and multiple client systems connected to the server system over a network. In the system, an exchange of information between the server system and the client systems is performed through packet communication.

The server system includes a client manager that identifies and manages the client systems when receiving the packet communication over the network. The server system further includes a server side request manager that manages a request through the packet communication over the network for each of the client systems based on a result of the identification by the client manager. The server system further includes a memory that stores information managed by the server side request manager.

The client system includes a first storage that stores different kinds of generated requests. The client system further includes a second storage that stores the different kinds of requests when they are to be sent to the server system. The client system further includes a client side request manager that generates the different kinds of requests in accordance with operations by a player as the network game advances, stores the different kinds of generated requests in the first storage, stores a predetermined amount of the different kinds of stored requests in the second storage and transmits a packet including the different kinds of requests stored in the second storage. The client system further includes a transmitter and receiver that sends the packet to the server system and receives a reply packet from the server system.

According to a second aspect of the invention, there is provided a server system that provides an environment for a network game. The server system includes a client manager that identifies and manages client systems when receiving a packet communication over a network. The server system further includes a server side request manager that manages a request through the packet communication over the network for each of the client systems based on a result of the identification by the client manager. The server system further includes a memory that stores information managed by the server side request manager.

According to a third aspect of the invention, there is provided a client system that generates different kinds of requests in accordance with states of a network game provided by a server system. The client system includes a first storage that stores generated different kinds of requests. The client system further includes a second storage that stores the different kinds of requests when they are to be sent to the server system. The client system further includes a client side request manager that generates the different kinds of requests in accordance with operations by a player as the network game advances, stores the different kinds of generated requests in the first storage, stores a predetermined amount of the different kinds of stored requests in the second storage and transmits a packet including the different kinds of requests stored in the second storage. The client system further includes a transmitter that sends the transmission packet to the server system and a receiver that receives a reply packet from the server system.

According to a fourth aspect of the invention, there is provided a network game processing method, in which a server system that provides an environment for a network game and client systems connected to the server system over a network are provided. In the method, an exchange of information between the server system and the client systems is performed through packet communication. According to the method, the server system identifies and manages the client systems when receiving the packet communication over the network. The server system further manages a request through the packet communication over the network for each of the client systems based on a result of the identification, and stores the managed information.

Furthermore, according to the method, the client system stores different kinds of generated requests in a first storage, and stores the different kinds of requests when they are to be sent to the server system in a second storage. Furthermore, the client system, by using a client side request manager, generates the different kinds of requests in accordance with operations by a player as the network game advances. The client system, by using the client side request manager, further stores the different kinds of generated requests in the first storage, and stores a predetermined amount of the different kinds of stored requests in the second storage. The client system, by using the client side request manager, further transmits a packet of the different kinds of requests stored in the second storage, transmits the packet to the server system and receives a reply packet from the server system.

According to a fifth aspect of the invention, there is provided a recording medium on which is recorded a program. The program causes a server system to identify and manage client systems when receiving packet communications over a network. The program further causes the sever system to manage a request through the packet communication over the network for each of the client systems based on a result of the identification. The program further causes the server system to store the managed information.

According to a sixth aspect of the invention, there is provided a recording medium on which is recorded a program. The program causes a client system to store different kinds of generated requests in a first storage. The program further causes a client system to store the different kinds of requests when they are to be sent to the server system in a second storage. The program further causes the client system, to generate, by using a client side request manager, the different kinds of requests in accordance with operations by a player as the network game advances.

The program further causes the client system to store, by using a client side request manager, the different kinds of generated requests in the first storage. The program further causes the client system to store, by using the client side request manager, a predetermined amount of the different kinds of stored requests in the second storage and to transmit a packet including the different kinds of requests stored in the second storage. The program further causes the client system, to transmit, by using the client side request manager, the packet to the server system and to receive a reply packet from the server system.

### BRIEF DESCRIPTION OF THE DRAWINGS

Fig. 1 is a diagram showing an embodiment of a network game system of the present invention;
Fig. 2 is a diagram showing a detail of an echo server of the network game system in Fig. 1;
Fig. 3 is a diagram showing a detail of a client (communication terminal) of the network game system in Fig. 1;
Fig. 4 is a time chart for explaining a general operation of the network game system in Fig. 1;
Fig. 5 is a flowchart for explaining an operation for storing a request in the client (communication terminal) in Fig. 3;
Fig. 6 is a flowchart for explaining an operation for issuing a packet in the client (communication terminal) in Fig. 3;
Fig. 7 is a flowchart for explaining an operation for processing the returned packet in the client (communication terminal) in Fig. 3; and
Fig. 8 is a time chart for explaining a retransmission operation in the network game system in Fig. 1.

### DESCRIPTION OF THE PREFERRED EMBODIMENTS

Embodiments of the present invention will be described with reference to the attached drawings.

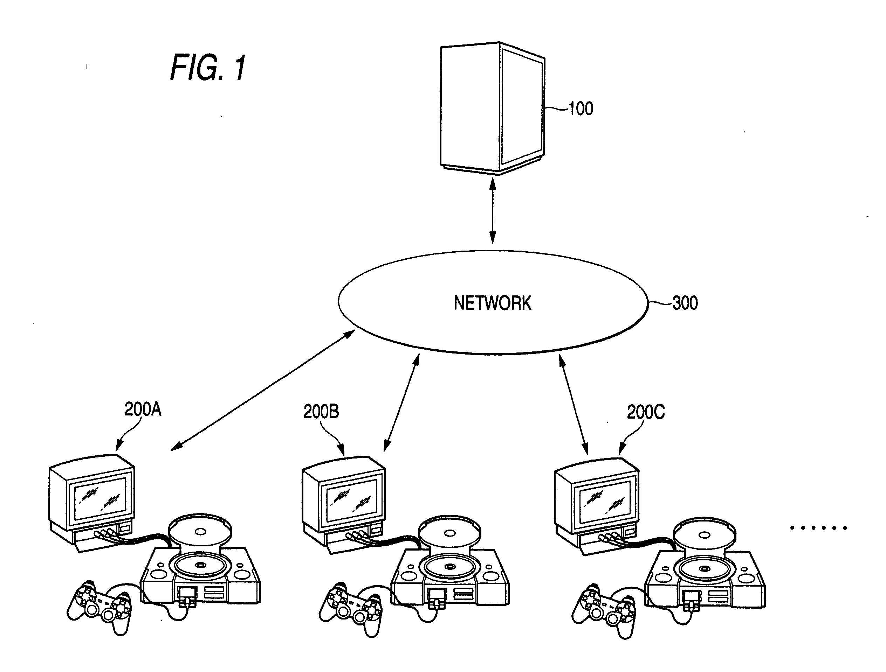

Fig. 1 shows an embodiment of a network game system of the present invention. The network game system shown in Fig. 1 includes an echo server 100, which is a server system for providing a network game environment, and clients (communication terminals) 200A, 200B and 200C, which are multiple client systems used for participating in a game. Server 100 and clients 200A, 200B and 200C communicate with each other over a network 300.

The packet communication is performed between the echo server 100 and each of the clients (communication terminals) 200A, 200B and 200C. In one embodiment, UDP/IP is used as the communication protocol for the packet communication, because UDP/IP requires simpler steps than those of TCP/IP for fast data transfer.

In one embodiment, a predetermined maximum communication amount within a unit period of time is set in the packet communication between the echo server 100 and each of the clients (communication terminal) 200A, 200B and 200C. This is because the estimation of a current network load is extremely difficult. By keeping the network load below the predetermined value (set value), a good response speed can be maintained between the echo server 100 and each of the clients (communication terminal) 200A, 200B and 200C. The size of a packet communicated between the echo server 100 and each of the clients (communication terminals) 200A, 200B and 200C is also determined in order to keep the maximum communication amount of the packet communication lower than the predetermined value (set value). The details will be described later.

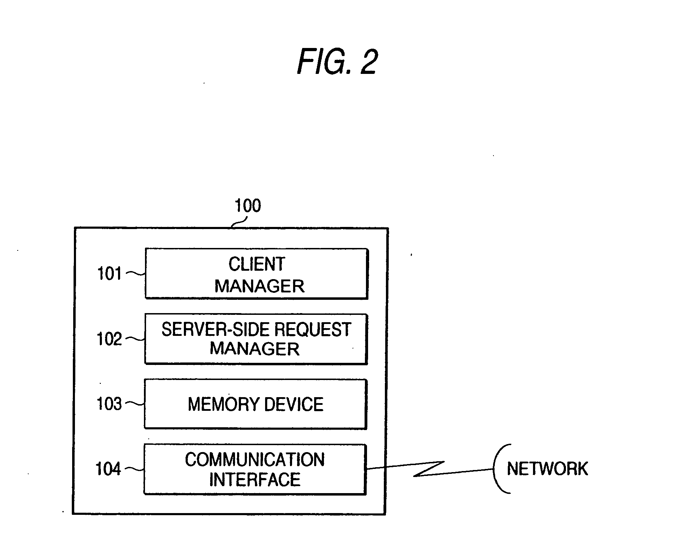

The echo server 100 includes a client manager 101, a server side request manager 102, a memory device 103 and a communication interface 104, as shown in Fig. 2.

The client manager 101 manages each of the clients (communication terminals) 200A, 200B and 200C accessing the network 300. For the management, each of the clients 200A, 200B and 200C can be identified based on data indicating the sender within a packet from each of the clients 200A, 200B and 200C.

The server side request manager 102 manages requests from the clients 200A, 200B and 200C generated during a game. The detail will be described later. Information on processed requests from the clients 200A, 200B and 200C and the history of the information are stored in the memory device 103. The details of the requests will be described later. The communication interface 104 performs the packet communication with each of the clients 200A, 200B and 200C over the network 300.

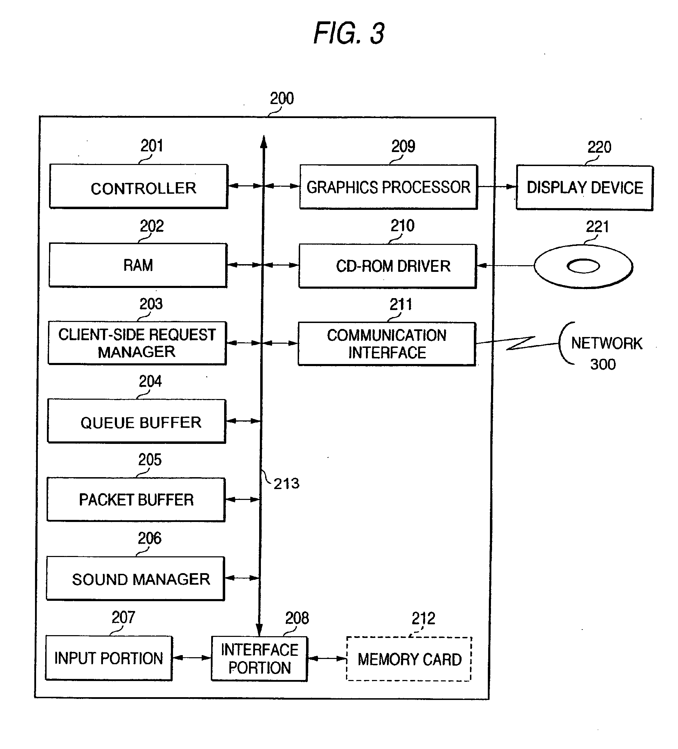

As shown in Fig. 3, each of the clients 200A, 200B and 200C includes a controller 201, a RAM 202, a client side request manager 203, a QUEUE buffer 204, a packet buffer 205, a sound processor 206, an input unit 207, an interface 208, a graphics processor 209, a CD-ROM driver 210, and a communication interface 211. The data exchanges among the components are performed through a data bus 213.

The controller 201 controls operations by the components in accordance with a predetermined control program stored in a ROM, not shown. The RAM 202 stores a game program and audio/video data in the CD-ROM 221 read by the CD-ROM driver 210.

The client side request manager 203 manages requests. In order to manage requests, different kinds of requests are generated in accordance with operation by a player during a network game. Each of the generated requests is stored in the QUEUE buffer 204 one time. A predetermined number of requests are stored in the packet buffer 205 in accordance with predetermined timing. Then, a transmission packet for the requests stored in the packet buffer 205 is transmitted at predetermined intervals.

Here, the request is generated when a player character performs some action in accordance with a operation by a player as a result of the determination by the player, as will be described later. For example, a request is generated when the position of the player character is moved, when a command (fight, magic and so on) is executed, when the equipment is changed and so on. The amount of each request generated in accordance with each operation depends on the type but is generally several tens of bytes. As many as possible of these requests are stored in the packet buffer 205 having a predetermined size (for example, 1500 bytes), as will be described later. Therefore, a total number of requests to be stored is controlled so as not to exceed a predetermined amount of storage.

Different kinds of requests generated during a game are stored one time in the QUEUE buffer 204, which is a first storage unit. A request within the QUEUE buffer 204 to be transmitted to the echo server 100 is stored in the packet buffer 205, which is a second storage unit. Here, the packet buffer 205 has a storage area of a predetermined size (for example, 1500 bytes). Therefore, only a predetermined amount of the requests are stored in the packet buffer 205.

The sound processor 206 converts and outputs audio data stored in the RAM 202 to analog signals in accordance with a state of a game. The input unit 207 inputs data indicating a type of operation instruction from a controller, keyboard, a remote controller and so on.

The interface 208 exchanges game information with the memory card 212. The graphics processor 209 converts video data stored in the RAM 202 to analog signals in accordance with a state of a game and outputs the analog signals to the display unit 220.

The CD-ROM driver 210 reads data in the CD-ROM 221. The communication interface 211 is responsible for the communication with the network 300.

Here, each of the clients (communication terminals) 200A, 200B and 200C may be a personal computer, a laptop personal computer, a PDA (personal information terminal), a mobile phone, a Web TV, a game machine having a communication function and so on.

Next, a network game processing method using the network game system in Fig. 1 will be described.

First of all, the general packet transmission will be described. In order to play a network game, the CD-ROM 221 is reproduced by the CD-ROM driver 210. A game program and/or audio/video data reproduced by the CD-ROM driver 210 are stored in the RAM 202. Here, the game program may be a role-playing game, for example.

A role-playing game may advance in order to reach a certain goal or may advance without any final goal in particular. When a game advances for a certain goal, a player operates a character in a game so that the character performs an action. Then, different kinds of events are cleared. The action by the character is determined by a player operation. When the result of the action satisfies a condition for clearing an event, the event is cleared. In this way, every time one event is cleared, the player can approach the final goal (event).

The scenes of role-playing games include a realistic world, a fantasy world in which a hero plays an active role, the universe in the science fiction world, a horror world, which is similar to a real world but in which a horrific monster appears, and any other fictional world.

Each player for playing a role-playing game can advance the game by manipulating one of characters living in such a world. In this case, each player selects one character.

In order to advance the game, prepared events must be cleared. Thus, the player must input so as to cause the character to perform a desired action. The character can perform moving actions such as walking and running, motion actions such as waving a sword and using magic and actions for changing the character's equipment. Every time when one of these actions is caused to be performed, a request in accordance with the action is generated.

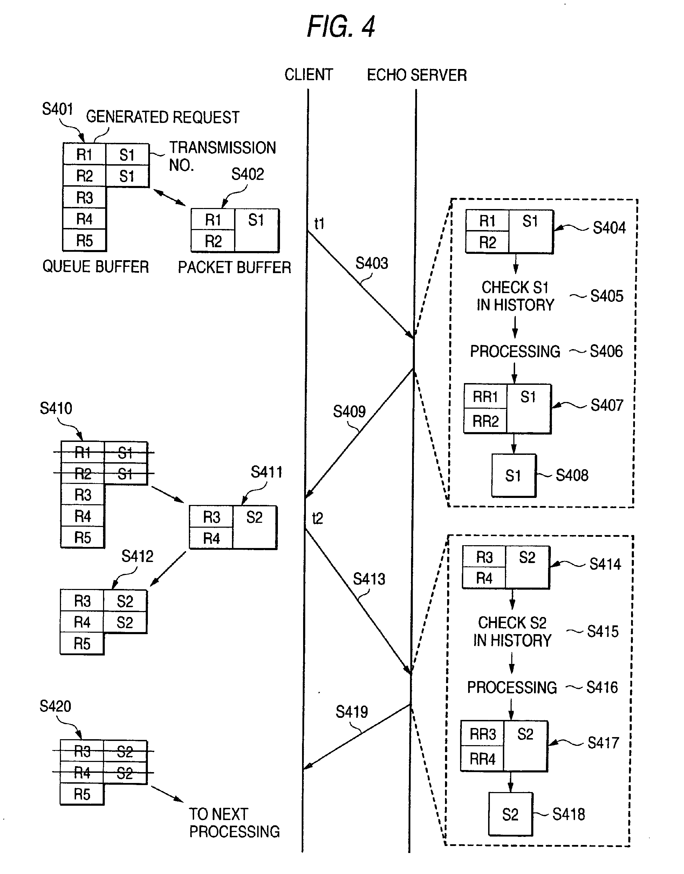

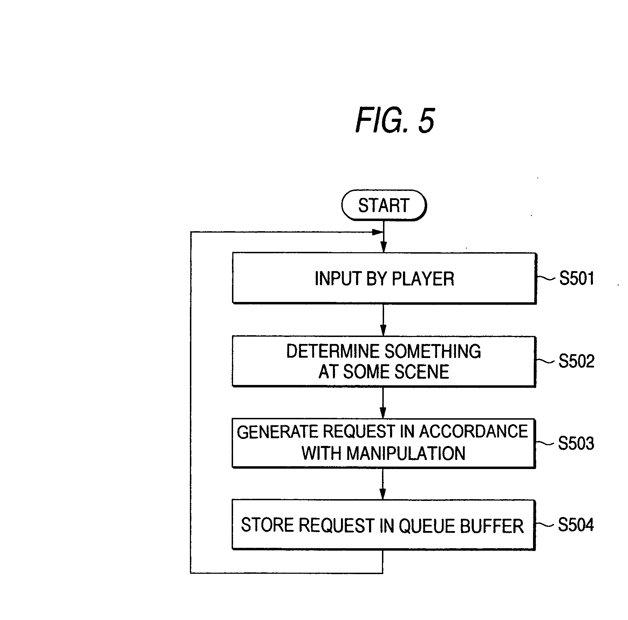

As shown in Fig. 4, when requests R1 to R5 are generated in accordance with inputs by a player, these requests R1 to R5 are stored in the QUEUE buffer 204 (step S401). In other words, as shown in an operation for storing a request in Fig. 5, an input by a player (step S501) causes a character selected by the player (player character) (step S502) to perform a predetermined action in a certain scene. In this case, if the player character is moved from a certain position by operating a controller, a keyboard, a remote controller or the like, a request for the action is generated by the request manager 203 (step S503). The generated request is stored in the QUEUE buffer 204 by the request manager 203 (step S504).

After that, every time when the player causes the player character to perform a next action in a certain scene, a request in accordance with the action is generated and is stored in the QUEUE buffer 204 sequentially by the request manager 203.

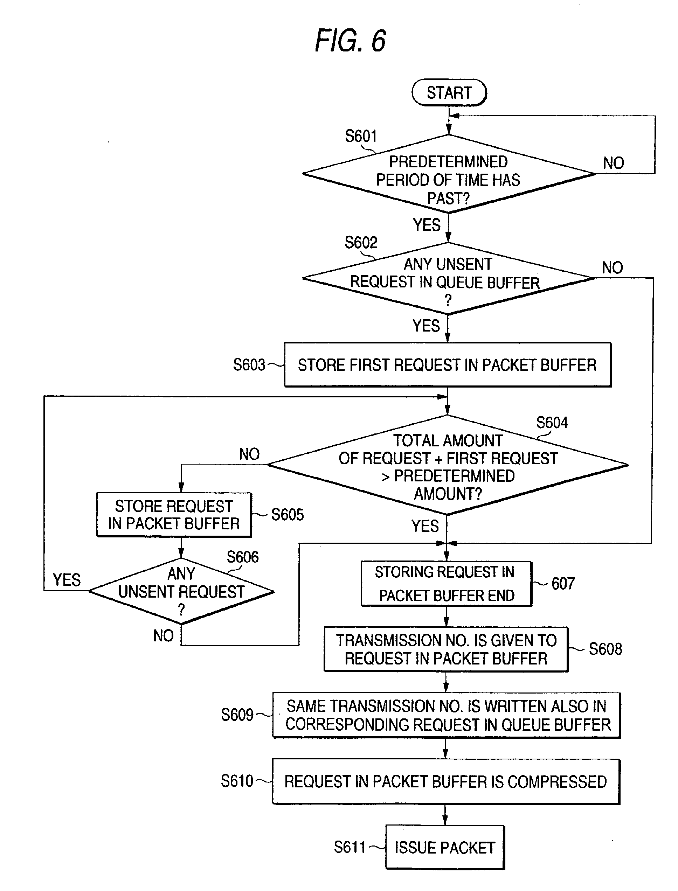

When the request is generated and the generated request is stored in the QUEUE buffer 204, as shown in Fig. 4 (step S402), requests within the QUEUE buffer 204 are stored in the packet buffer 205. In other words, in an operation for transmitting a packet in Fig. 6, after a request is stored in the QUEUE buffer 204 by the request manager 203, whether a predetermined period of time has passed or not is judged by the request manager 203 (step S601). If it is determined that the predetermined period of time has passed, whether or not any request, which has not been transmitted to the QUEUE buffer 204 is judged by the request manager 203 (step S602). The request, which has not been transmitted, will be described later.

When it is determined that a request, which has not been transmitted, exists, the first request within the QUEUE buffer 204 is stored in the packet buffer 205 by the request manager 203 (step S603). Here, whether or not a total size of the requests, including the first request stored in the packet buffer 205 reaches the predetermined amount of memory is judged by the request manager 203 (step S604). If the predetermined amount is not reached, the next request is stored in the packet buffer 205 (step S605). At step S606, whether or not any request, which has not been transmitted yet, exists in the QUEUE buffer 204 is determined. At the step S604, if it is judged that the predetermined amount of memory is reached, storing requests in the packet buffer 205 by the request manager 203 ends (step S607). At the step S606, if requests, which have not been transmitted, do not exist, storing requests into the packet buffer 205 ends.

When storing requests into the packet buffer 205 ends, transmission numbers are given to the requests in the packet buffer 205 (step S608). Here, the same transmission numbers are assigned to the requests within the QUEUE buffer 204, which correspond to the requests within the packet buffer 205, respectively (step S609). The transmission numbers are given by the request manager 203.

After the transmission numbers have been assigned, the requests within the packet buffer 205 are compressed and a packet is transmitted by the request manager 203 (steps 610 and 611).

As shown in Fig. 4, at a time t1, which is the time for sending a packet, a packet transmitted by the request manager 203 is sent to the echo server 100 as a transmission packet over the network 300 (step S403).

When the echo server 100 side receives the transmission packet from the client 200 (step 404), the transmission number S1 within the transmission packet is checked in a history stored in the memory device 103 (step S405). If the transmission number S1 is found in the history, the transmission packet is discarded. On the other hand, if the transmission number S1 is not found in the history, the requests R1 and R2 within the transmission packet are processed (step S406). Here, the requests R1 and R2, which have been processed, are stored in the memory device 103 as processed requests RR1 and RR2 (step S407). Once the processed requests RR1 and RR2 are stored in the memory device 103, a reply packet including the transmission number S1 received from the echo server 100 side is returned to the client 200 side (step S408 and 409).

In the client 200 side, whether the requests R1 and R2 corresponding to the transmission number S1 are in the QUEUE buffer 204 or not is judged by the request manager 203 based on the transmission number S1 in the reply packet returned from the echo server 100 side. If it is determined that the requests R1 and R2 are in the QUEUE buffer 204, the requests R1 and R2 are discarded (step S410).

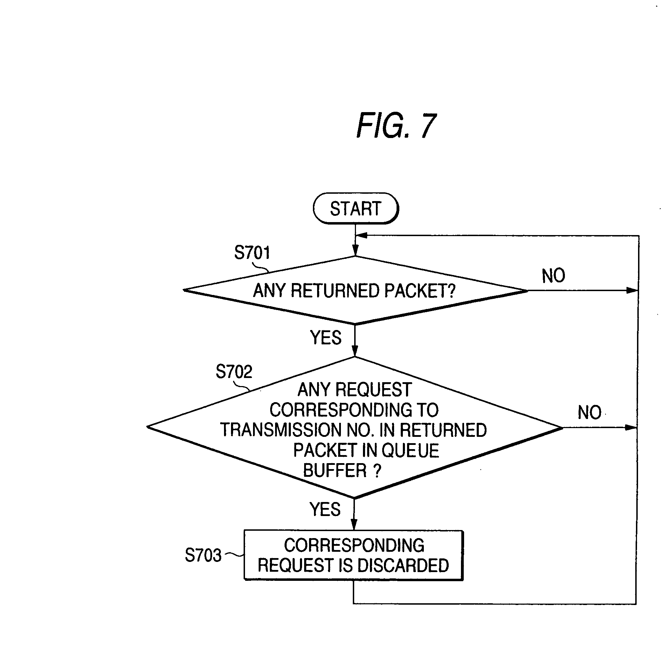

In an operation for processing a reply packet as shown in Fig. 7, when the client 200 side receives a reply packet returned from the echo server 100 side (step S701), whether or not any request corresponding to a transmission number within the reply packet is in the QUEUE buffer 204 is judged by the request manager 203 (step S702) based on the transmission number in the reply packet. If so, the request is discarded (step S703).

Next, the same processing as the operation for issuing a packet as shown in Fig. 6 is performed at step 411 in Fig. 4. In other words, requests R3 and R4 within the QUEUE buffer 204 are stored in the packet buffer 205 sequentially by the request manager 203. When it is determined that the amount of the stored requests R3 and R4 reaches a predetermined amount, the storing of requests into the packet buffer 205 ends. Then, transmission number S2 is written in the requests R3 and R4 within the packet buffer 205 (a step S411). Here, the same transmission number S2 is written in the requests R3 and R4 in the QUEUE buffer 204, which correspond to the requests in the packet buffer 205 (a step S412).

Once writing the transmission number S2 ends, the requests R3 and R4 within the packet buffer 205 are compressed and a packet is transmitted by the request manager 203. Then, at a time t2, which is the time for transmitting the packet, the packet is transmitted to the echo server 100 as a transmission packet over the network 300 (a step S413).

Similarly, when the echo server 100 side receives the transmission packet sent from the client 200 (step S414), the transmission number S2 within the transmission packet is checked in a history stored in the memory device 103 (step S415). If the transmission number (S2) is found in the history, the transmission packet is discarded. On the other hand, if the transmission number S2 is not found in the history, the requests R3 and R4 within the transmission packet are processed (a step S416). Here, the requests R3 and R4, which have been processed, are stored in the memory device 103 as processed requests RR3 and RR4 (a step S417). Once the processed requests RR3 and RR4 are stored in the memory device 103, a reply packet including the transmission number (S2) received from the echo server 100 side is returned to the client 200 side (steps 418 and 419).

Similarly, in the client 200 side, whether the requests R3 and R4 corresponding to the transmission number S2 are in the QUEUE buffer 204 or not is judged by the request manager 203 based on the transmission number S2 in the reply packet returned from the echo server 100 side. If it is determined that the requests R3 and R4 are in the QUEUE buffer 204, the requests R3 and R4 are discarded (a step S420).

After this, the transmission packet of a predetermined amount is sent from the client 200 side to the echo server 100 side sequentially in the same manner. Based on the transmission number in the reply packet, whether or not the request corresponding to the transmission number is in the QUEUE buffer 204 is determined in the client 200 side. If so, the request is discarded. This processing is repeated until the network game ends.

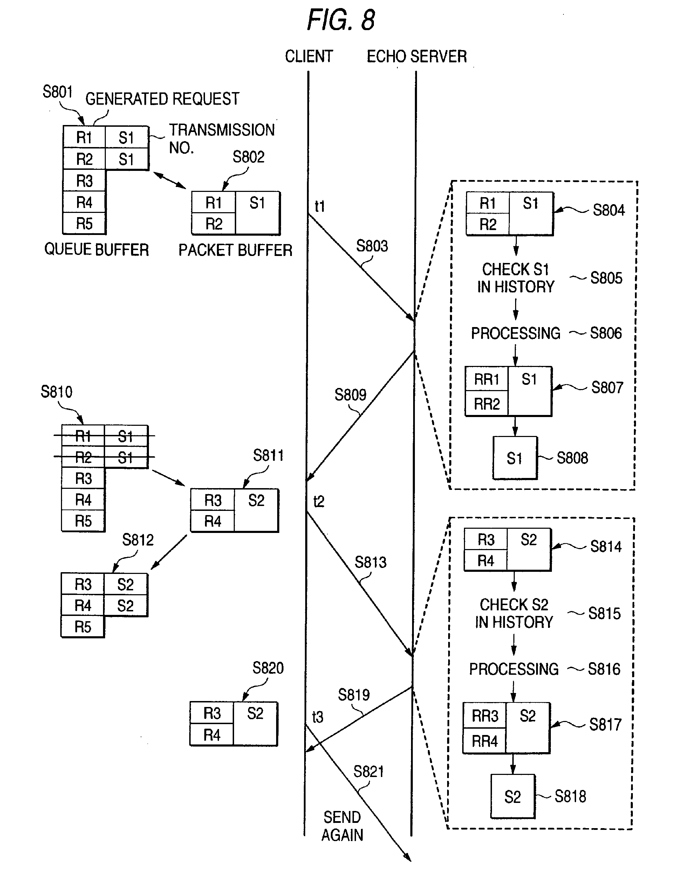

Next, when no reply packets are returned for the transmission packet transmitted previously even at the time for sending the next packet, the transmission packet transmitted previously is sent again. This case will be described with reference to Fig. 8.

In Fig. 8, steps 801 to 818 are the same as steps 401 to 418 in Fig. 4. Therefore, the description will be omitted here.

For example, after the transmission packets for the requests R3 and R4 within the packet buffer 205 are sent, the processing for issuing a packet for the next request R5 and subsequent requests is started in the client 200 side. At a time t3, which is the time for sending the packet for the request R5 and the subsequent requests, the transmission packet is sent to the echo server 100 over the network 300 in the same manner. If it is determined that the reply packet for the requests R3 and R4 is not returned at the time t3 (step 819), the transmission packet for the previous requests R3 and R4 is sent to the echo server 100 again at the time t3 (steps 820 and 821).

The reply packet is returned for the transmission packet including the resent requests R3 and R4 so that the packet for the next request and the subsequent requests can be ensured to have been sent.

In this embodiment, a predetermined maximum communication amount is set for packet communication between the echo server 100, which is a server system, and each of the clients 200A, 200B and 200C, which are client systems. In addition, the packet sent from each of the clients 200A, 200B and 200C is a predetermined size. Thus, a load on the network 300 can be reduced, and quick responses can be obtained.

A predetermined maximum communication amount is set for packet communication between the echo server 100, which is a server system, and each of the clients 200A, 200B and 200C, which are client systems. Thus, even when many players are participating in a game and the network load becomes heavy, a communication amount exceeding the prepared backbone does not occur. Therefore, a time lag of a response from the echo server 100 due to the increase in traffic can be suppressed.

When a transmission number within a transmission packet from the clients 200A, 200B and 200C to the echo server 100, is not found in a history stored in the memory device 103, a reply packet including the transmission number can be returned to the clients 200A, 200B and 200C. In this case, the network load can still be reduced.

Each of the clients 200A, 200B and 200C can send a transmission packet to the echo server 100 through the communication interface 211, which is an exchanging unit, and can receive a reply packet from the echo server 100. Different kinds of requests in accordance with states of a network game are generated by the client side request manager 203. The generated requests are stored in the QUEUE buffer 204, which is a first storage unit. When a predetermined time has passed, the requests in a predetermined amount of the QUEUE buffer 204 are stored in the packet buffer 205. Then, a packet in which a transmission number is written in the requests and compressed is transmitted. Therefore, the network load does not exceed a predetermined maximum communication amount. As a result, the occurrence of the communication amount exceeding the backbone can be suppressed.

In one embodiment, the communication protocol for the transmission packet and the reply packet between the echo server 100 and each of the clients 200A, 200B and 200C is UDP/IP, which does not require more complex steps than those of TCP/IP. Therefore, the packet communication can be performed fast.

In this case, if the clients 200A, 200B and 200C do not receive the reply packet from the echo server 100 within a predetermined period of time, the previously sent transmission packet is sent again. Therefore, without the steps adopted for TCP/IP, the transmission packet can be confidently sent from the clients 200A, 200B and 200C to the echo server 100.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

## Claims

1. A network game system comprising:
a server system that provides an environment for a network game and a plurality of client systems connected to the server system over a network, wherein an exchange of information between the server system and the plurality of client systems is performed through packet communication;
the server system comprising:
a client manager that identifies and manages the client systems when receiving the packet communication over the network;
a server side request manager that manages a request through the packet communication over the network for each of the client systems based on a result of the identification by the client manager; and
a memory that stores information managed by the server side request manager, and
the client system comprising:
a first storage that stores different kinds of generated requests;
a second storage that stores the different kinds of requests when the requests are to be sent to the server system;
a client side request manager that generates the different kinds of requests in accordance with operations by a player as the network game advances, stores the different kinds of generated requests in the first storage, stores a predetermined amount of the different kinds of stored requests in the second storage and transmits a packet comprising the different kinds of requests stored in the second storage;
a transmitter that sends the packet to the server system; and
a receiver that receives a reply packet from the server system.

2. The network game system according to claim 1, wherein a storage area of the second storage is a size corresponding to the predetermined amount,
the client side request manager one time stores the different kinds of generated requests in the first storage, stores the predetermined amount of the different kinds of stored requests in the second storage in accordance with predetermined timing, transmits a packet comprising the different kinds of requests stored in the second storage at predetermined intervals, and discards the different kinds of requests within the first storage based on information within the reply packet.

3. The network game system according to claim 1, wherein a predetermined maximum communication amount is set within a unit period of time in the packet communication between the server system and the plurality of client systems.

4. A server system that provides an environment for a network game, comprising:
a client manager that identifies and manages a plurality of client systems when receiving a packet communication over a network;
a server side request manager that manages a request through the packet communication over the network for each of the client systems based on a result of the identification by the client manager; and
a memory that stores information managed by the server side request manager.

5. The server system according to claim 4,
wherein the client manager identifies a client system based on data indicating a sender within a packet from the client system, and
the server side request manager receives the packet from the client system, checks a transmission number within the packet in a history stored in the memory, processes requests within the packet when the transmission number is not found in the history, and stores the processed requests in the memory.

6. The server system according to claim 5,
wherein the server side request manager discards the transmission packet when the transmission number is found in the history.

7. The server system according to claim 4,
wherein the server system comprising an echo server that returns a reply packet including the transmission number to the client system only when the transmission number within the packet from the client system is not found in the history stored in the memory.

8. The server system according to claim 4,
wherein the packet is transmitted by using UDP/IP as a communication protocol.

9. A client system that generates different kinds of requests in accordance with states of a network game provided by a server system, the client system comprising:
a first storage that stores generated different kinds of requests;
a second storage that stores the different kinds of requests when the requests are to be sent to the server system;
a client side request manager that generates the different kinds of requests in accordance with operations by a player as the network game advances, stores the different kinds of generated requests in the first storage, stores a predetermined amount of the different kinds of stored requests in the second storage and transmits a packet comprising the different kinds of requests stored in the second storage;
a transmitter that sends the transmission packet to the server system; and
a receiver that receives a reply packet from the server system.

10. The client system according to claim 9, wherein a storage area of the second storage is a size corresponding to the predetermined amount,
the client side request manager one time stores the different kinds of generated requests in the first storage, stores the predetermined amount of the different kinds of stored requests in the second storage in accordance with predetermined timing, transmits a packet of the different kinds of requests stored in the second storage at predetermined intervals, and discards the different kinds of requests within the first storage based on information within the reply packet.

11. The client system according to claim 9,
wherein the client side request manager writes a transmission number in the requests within the second storage and compresses the requests within the second storage when transmitting the packet.

12. The client system according to claim 11,
wherein the client side request manager judges whether any unsent request exists in the first storage when the requests in the first storage are stored in the second storage, when the unsent request exists, stores the requests in the predetermined amount of memory in the second storage, and writes the transmission number, which is written in the requests in the second storage, into the corresponding requests in the first storage.

13. The client system according to claim 12,
wherein the client side request manager judges, based on the transmission number within a reply packet from the server system, whether any request corresponding to the transmission number exists within the first storage, and if so, discards the requests.

14. The client system according to claim 9,
wherein the client side request manager transmits the packet, which has been sent previously, again when the reply packet is not received from the server system within a predetermined period of time.

15. A network game processing method in which a server system that provides an environment for a network game and a plurality of client systems connected to the server system over a network are provided, and an exchange of information between the server system and the plurality of client systems is performed through packet communication, the method comprising, by using the server system:
identifying and managing the client systems when receiving the packet communication over the network;
managing a request through the packet communication over the network for each of the client systems based on a result of the identification; and
storing the managed information, and
the method further comprising, by using one of the client systems:
storing different kinds of generated requests in a first storage;
storing the different kinds of requests when the requests are to be sent to the server system in a second storage;
by using a client side request manager, creating the different kinds of requests in accordance with operations by a player as the network game advances, storing the different kinds of generated requests in the first storage, storing a predetermined amount of the different kinds of stored requests in the second storage and transmitting a packet of the different kinds of requests stored in the second storage;
transmitting the packet to the server system; and
receiving a reply packet from the server system.

16. The network game processing method according to claim 15, in which a storage area of the second storage is a size corresponding to the predetermined amount, the method further comprising, by using the client side request manager:
one time storing the generated different kinds of requests in the first storage; storing the predetermined amount of different kinds of stored requests in the second storage in accordance with predetermined timing, transmitting a packet comprising the different kinds of requests stored in the second storage at predetermined intervals, and discarding the different kinds of transmitted requests within the first storage based on information within the reply packet.

17. The network game processing method according to claim 15, wherein a predetermined maximum communication amount is set within a unit period of time in the packet communication between the server system and the plurality of client systems.

18. A recording medium on which is recorded a program for causing a server system to execute:
identifying and managing client systems when receiving the packet communication over the network;
managing a request through the packet communication over the network for each of the client systems based on a result of the identification; and
storing the managed information.

19. A recording medium on which is recorded a program for causing a client system to execute:
storing different kinds of generated requests in a first storage;
storing the different kinds of requests when the requests are to be sent to the server system in a second storage;
by using a client side request manager, generating the different kinds of requests in accordance with operations by a player as the network game advances, storing the different kinds of generated requests in the first storage, storing a predetermined amount of the different kinds of stored requests in the second storage and transmitting a packet of the different kinds of requests stored in the second storage;
transmitting the packet to the server system; and
receiving a reply packet from the server system.
